# EUROPEAN PATENT SPECIFICATION

(11) **EP 4 049 740 B1**
(45) Date of publication and mention of the grant of the patent: **25.10.2023**
(21) Application number: 22157140.9
(22) Date of filing: 16.02.2022
(51) Int. Cl.: B01D 46/00, B01D 46/10

(54) **SIDE ENTRY WAVE SEAL AIR CLEANER**
LUFTREINIGER MIT SEITENEINTRITTWELLENABDICHTUNG
ÉPURATEUR D'AIR À JOINT À VAGUES À ENTRÉE LATÉRALE

(30) Priority: 26.02.2021 US 202163153971 P; 30.03.2021 US 202163167696 P; 03.02.2022 US 202217592118
(43) Date of publication of application: 31.08.2022
(73) Proprietor: Parker-Hannifin Corporation, Cleveland, Ohio 44124-4141 (US)
(72) Inventor: MANLEY, James R, Myrtle, MS 38650 (US); EHRENBERG, Brian T, Kansas City, MO 64157 (US)
(74) Representative: Murgitroyd & Company

(56) References cited:
- DE-A1-102014 012 490
- JP-A- 2001 329 921
- US-A1- 2018 345 196
- US-A1- 2020 072 169

## Description

### FIELD OF THE INVENTION

The present invention generally relates to air filter elements and/or air cleaners incorporating the same, and more particularly relates to one or more features associated with air filters to include side entry installation structures to facilitate installation and seal compression and/or seal shape configurations.

### BACKGROUND OF THE INVENTION

Filter assemblies may be used to filter any type of fluid, such as, for example, air, gasoline, diesel fuel, lubricating oil, water, coolant fluid, and others. Filters are commonly employed to remove particulate matter flowing in a fluid stream such as the removal of dust and other particulate from air in the case of an air filter. Air filtration products in particular are used in a variety of such applications, such as for example in the turbo engine components of a vehicle engine.

With respect to air filters and air filter elements, a variety of "side entry" air filters currently form the state of the art. For example, EP 1520975 to Maurer et al. entitled "Air Filter Apparatus in the Intake System of an Internal Combustion Engine" and assigned to Man and Hummel GmbH demonstrates a conventional side entry concept, whereby a filter element is installed into a side opening of a housing base that is covered by a pivoting housing lid to secure and seal the filter element in the housing between an inlet and an outlet. During pivoting movement of the lid, the lid cams and clamps the filter element into sealing relationship with the housing. There are other examples of such side entry filters including various embodiments disclosed in DE 102015009535 to Menben et al.; DE 102017001268 to Wubbeling; U.S. Pub. No. 2017/0095761 to Knight et al. entitled "Filter Assembly with Cam-Lock Filter Interface"; U.S. Pub. No. 2017/0304760 to Kaufmann et al. entitled "Housing Main Part of a Filter Housing, Filter System, and Pre-Separator Module of a Filter System"; WO 2017/133797 to Klaus-Dieter et al., entitled "Filter Element, Element Frame of a Filter Element, Filter Bellows of a Filter Element and Filter"; U.S. Pat. No. 7,396,375 to Nepsund et al. entitled "Housing and Method of Installation"; U.S. Pat. No. 7,323,029 to Engelland et al. entitled "Housing and Method of Installation"; U.S. Pat. No. 7,655,074 to Nepsund et al. entitled "Housing and Method of Installation"; U.S. Pat. No. 7,682,416 Engelland et al. entitled "Projections and Structure for Engaging Housing"; U.S. Pat. No. 7,905,936 to Coulonvau et al. entitled "Filter Arrangements, Housing Assemblies"; and U.S. Pat. No. 8,048,188 to Widerski et al. entitled "Projections and Structure for Engaging Housings". Some of these designs such as that demonstrated by the EP 1520975 may suffer from space constraint drawbacks in that they require excessive space relative to filtration capacity, or do not afford certain space or shape envelope considerations or flexibility for engine applications where space may be limited or constrained. In other instances, there may be difficulties in either easily or reliably installing the filter, and/or reliability issues or complexities associated with proper installation or sealing of the filter.

Additionally, in the filter art, it is also known that wave seal configurations are provided. For example, the present assignee Parker-Hannifin (or its affiliate) has developed various wave seal configuration concepts for such filters disclosed in the art that include WO 2017/079191 entitled "Wave Seal for Filter Element" and U.S. Pat. No. 8,916,044 entitled "Filter Element Wave Gland Seal"; additionally, other seal configurations are shown, for example, in U.S. Pub. No. 2016/0236128 to Campbell et al. U.S. Patent No. 10,729,999 entitled, "Wave Seal For Filter Element," and U.S. Patent Pub. No. 2020/0072169 entitled, "Non Cylindrical Filter Element and Side Entry Air Cleaner" disclose air filter elements.

With respect to conventional air filters, there is the potential for improvement, for example, in improving sealing effectiveness while increasing filtration capacity. Furthermore, it is desirable to maintain ease of installation and replacement of the filter element. There also have been issues of high cost in connection with manufacturing various filtration products, and air filtration products in particular. Particularly for irregular seal configurations, it is advantageous that the art provides embodiments of such side entry configurations that can be manufactured and installed in a reliable and noncomplex manner. Additionally, improvements for filter assembly implementations with respect to certain uncommon shapes of filter elements or configurations as to construction and installation are desirable.

The following documents may also provide useful technical background to the invention: DE102014012490A1 and US2018345196A1.

Embodiments of the present invention provide improvements over the state of the art relative to side entry filters, installation or removal structures on filter elements that may be implemented, and/or new seal configurations for filters. These and other advantages of the invention, as well as additional inventive features, will be apparent from the description of the invention provided herein.

### BRIEF SUMMARY OF THE INVENTION

The claimed invention is defined by appended claim 1. Optional features are defined in the appended dependent claims.

In the context of the present application, the term "axial" or "axially" is used to indicate force or movement in the direction of the central axis for the filter assembly and filter element.

In an aspect, embodiments of the invention provide a filter element for an air filter. The filter element includes a filter media pack having an inlet end, an outlet end and an outer periphery extending between the inlet end and the outlet end. The inlet end and the outlet end are separated along a central axis. The outer periphery includes a first pair of opposed sides between the inlet end and the outlet end, and a second pair of opposed sides extending transversely between the first pair of opposed sides between the inlet end and the outlet end. A frame supports the outer periphery of the filter media pack. The frame includes opposing first frame side segments along the first pair of opposed sides of the media pack, and a second frame segment along at least one of the second opposed sides of the media pack. The first frame side segments each include a pair of guide projections along the respective first sides of the media pack from one of the second sides to the other of the second sides. The guide projections are spaced apart from one another from a greater distance at the one second side, to a smaller distance at the other second side and arranged to receive axial forces when received within a housing having complementary engagement surfaces. A housing seal is supported by the frame along at least one guide projection on each side of the media pack. Each housing seal is arranged to seal against one of the complementary engagement surfaces.

In certain embodiments of the invention, the at least one guide projection defines a non-linear bearing surface. The at least one guide projection may extend in an undulating fashion from the one of the second sides to the other of the second sides. In the claimed invention, one guide projection includes a plurality of spaced-apart, lateral projection components, with one of the projection components being closer to the one of the second sides, and another of the projection components being closer to the other of the second sides. In embodiments, the projection components each include a curved contact surface. In embodiments, the projection components each comprise cylindrical posts.

The filter element may further include a handle along the second frame segment. In some embodiments, the guide projections form a wedge shape. A filter assembly may include a filter housing and the filter element in which the filter housing includes an open end configured to receive the filter element, and a cover hingedly attached to the housing and moveable so as to close the open end of the housing.

Other aspects, objectives and advantages of the invention will become more apparent from the following detailed description when taken in conjunction with the accompanying drawings.

### BRIEF DESCRIPTION OF THE DRAWINGS

The accompanying drawings incorporated in and forming a part of the specification illustrate several aspects of the present invention and, together with the description, serve to explain the principles of the invention. In the drawings:
FIG. 1 is a perspective view of a filter element for an air filter, constructed in accordance with an example of this disclosure;
FIG. 2 is a plan view of a filter assembly incorporating the filter element of FIG. 1, and constructed in accordance with an example of this disclosure;
FIG. 3 is a perspective view of a partial filter assembly of FIG. 2, according to an example of this disclosure;
FIG. 4 is a perspective view of a fully assembled filter assembly, in accordance with an example of this disclosure;
FIG. 5 is a perspective view of an embodiment of a filter element for an air filter, constructed in accordance with an embodiment of the invention; and
FIG. 6 is a plan view of a filter assembly incorporating the filter element of FIG. 5, and constructed in accordance with an embodiment of the invention.

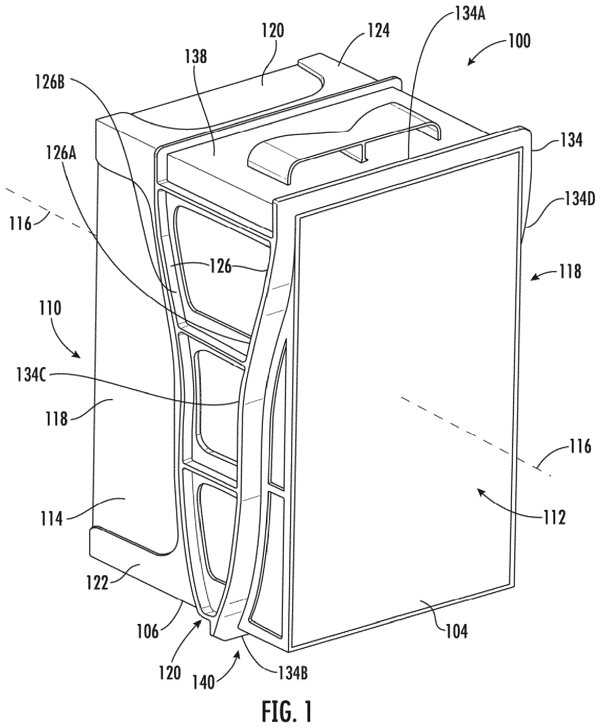

The embodiments shown in figures 1-4 do not form part of the invention but represent useful background art.

### DETAILED DESCRIPTION OF THE INVENTION

FIG. 1 shows a perspective view of a filter element 100 for an air filter such as might be used in a motor vehicle. The filter element 100 includes a filter media pack 104. In some existing filter elements such as that disclosed in U.S. Patent Pub. No. 2020/0072169 referenced above, the filter element is inserted diagonally into a housing through one side of the housing. That diagonal insertion into the housing also typically includes a partial rotation or pivoting of the media pack into a position in which the housing seal seats and seals against a surface of the housing. In embodiments of the invention, the media pack 104 of the present invention is perpendicularly inserted into a housing 102 so that no partial rotation or pivoting of the media pack 104 is required.

The filter media pack 104 is installed within a support frame 106, and includes an inlet end 110, an outlet end 112, and an outer periphery 114 extending between the inlet end 110 and the outlet end 112. The inlet end 110 and the outlet end 112 are separated along a central axis 116. In the embodiments shown, the media pack 104 has a shape similar to a rectangular prism with three pairs of opposing sides. The outer periphery 114 includes a first pair 118 of opposed sides between the inlet end 110 and the outlet end 112, and a second pair 120 of opposed sides extending transversely between the first pair 118 of opposed sides between the inlet end 110 and the outlet end 112.

The support frame 106 supports the outer periphery 114 of the filter media pack 104. The support frame 106 includes opposing first frame side segments 122 along each of the first pair of opposed sides 118 of the media pack 104, and a second frame segment 124 along at least one of a second pair of opposed sides 120 of the media pack 104. The first frame side segments 122 each include a pair of guide projections 126 extending along a respective side of the pair of opposing first sides 118. In a particular embodiment, the guide projections 126 span an entire width of the opposed first sides 118 from one side 138 of the second pair of opposing sides 120 to the other side 140 of the second pair of opposing sides 120.

In the embodiments shown, the guide projections 126 are variably spaced apart from one another with a broad spacing at the one side 138 of the second pair of opposing sides 120 where the distance between the guide projections 126 is at a maximum, to a narrow spacing at the other side 140 of the second pair of opposed sides 120 where the distance between the guide projections 126, is at a minimum. As shown in FIGS. 1-4, the distance between the opposed guide projections 126 is greatest at the one side 138 of the second pair of opposing sides 120, and gradually narrows during the progression from the one side 138 to the other side 140 of the second pair of opposing sides 120. Additionally, in certain embodiments, the distance between the opposed guide projections 126 may converge or come together at the other side 140 of the second pair of opposing sides 120.

The guide projections 126 define non-linear bearing surfaces configured to support a wave-shaped housing seal 134. The housing seal 134 is supported by the support frame 106 along at least one guide projection 126 on each of the first pair of opposed sides 118 of the media pack 104, and along the one side 138 of the second pair of opposed sides 120. In particular embodiments, the guide projections 126 extend in an undulating, wave-shaped fashion from the one side 138 to the other side 140 of the second pair of opposing sides 120. Consequently, the wave-shaped housing seal 134 has the same undulating shape to allow the housing seal 134 to seat on the surface of the guide projection 126.

In a further embodiment, the second frame segment 124 of the media pack 104 includes a handle 144. In certain embodiments, the guide projections 126 form a wedge shape. In some embodiments, the guide projections 126 are symmetrical about a median line 108 that extends perpendicularly to the central axis 116 and figuratively divides the opposing first frame side segments 122 into two pieces.

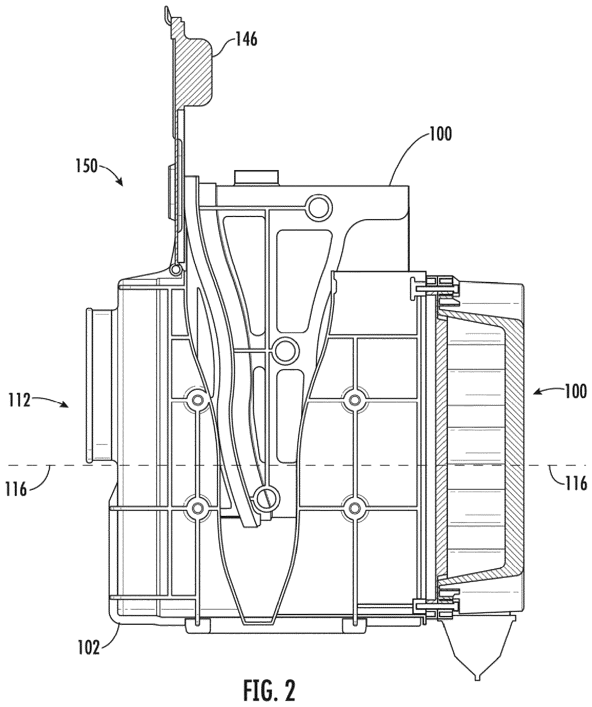

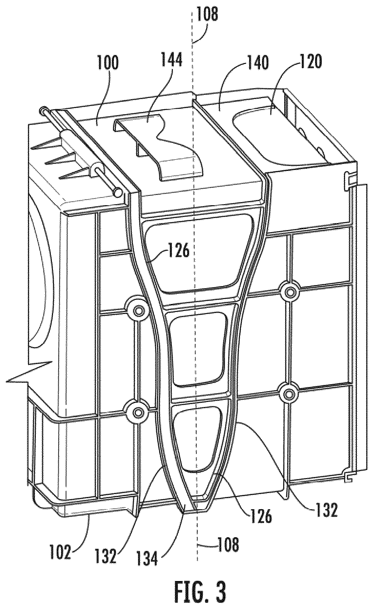

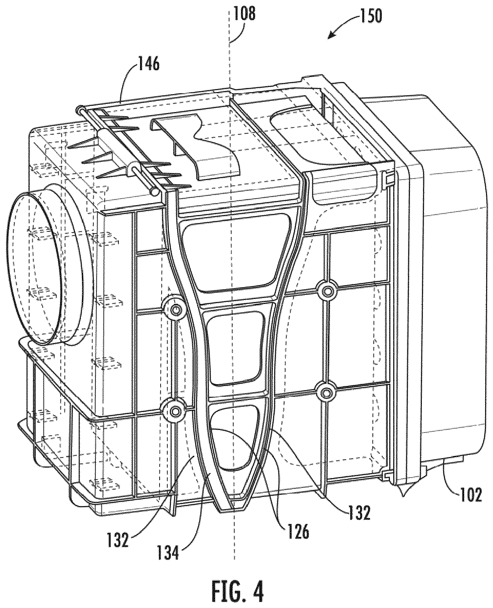

FIG. 2 is a plan view of the filter element 100 during insertion into the housing 102. As such, a housing cover or lid 146 is open. FIGS. 3 and 4 show perspective views of the filter assembly 150 with the filter element 100 fully inserted into the housing 102. As can be seen, the filter element 100 is installed into the housing 102 vertically, or at an angle normal to the central axis 116. Entry is typically through one side of the housing 102 in which an open end is configured to receive the filter element 100, and a lid or cover 146 hingedly attached to the housing 102 and moveable so as to close the open end of the housing 102 following installation of the filter element 100.

As a result, the housing 102 does not require the extra space upstream of the element face, as with some conventional filter assemblies. Thus, the filter assembly 150, as designed with the filter element 100 and the housing 102, is configured to maximize the use of volumetric space of the housing 102, while also removing the partial rotation or pivoting action used in some existing filter assemblies to seal the filter element 100 within the housing 102.

As explained above, the distance between the opposed guide projections 126 is greatest at the one side 138 of the second pair of opposing sides 120, and gradually narrows during the progression from the one side 138 to the other side 140 of the second pair of opposing sides 120. As a result of this arrangement, the guide projections 126 are configured to receive axial forces when received within the housing 102 having opposed complementary engagement surfaces 132. The housing seal 134 is arranged to seal against one of the complementary engagement surfaces 132. An axial seal pressure is created by the contact between the opposed complementary engagement surfaces 132 of the housing 102 and the opposed guide projections 126 of the filter element 100. In these embodiments, the seal pressure does not rely on the lid 146 forcing the filter element 100 into position. Accordingly, the stress on the lid 146, and the associated hinges and latches, is reduced as compared to some other filter assembly designs.

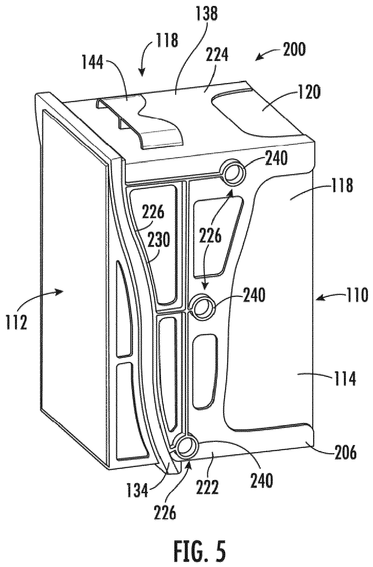

FIG. 5 is a perspective view of an embodiment of a filter element 200 for an air filter, constructed in accordance with an embodiment of the invention. The filter element 200 is similar to the filter element 100 in many respects except for the configuration of the guide projections 226. That is, filter element 200 has the same filter media pack 104 with the inlet end 110, outlet end 112, and outer periphery 114.

In the embodiment shown, the support frame 206 supports the outer periphery 114 of the filter media pack 104. The support frame 206 includes opposing first frame side segments 222 along the first pair of opposed sides 118 of the media pack 104, and a second frame segment 224 along at least one of the second pair of opposed sides 120 of the media pack 104, the first frame side segments 222 each including a pair of guide projections 226 along each of the respective first pair of opposed sides 118 of the media pack 104. The guide projections 226 include a non-linear guide projection component 230, and a lateral projection component 240 proximate one of the second pair of opposed sides 120. The non-linear guide projection component 230 and lateral projection component 240 are arranged to receive axial forces when received within the housing 102 having complementary engagement surfaces 132.

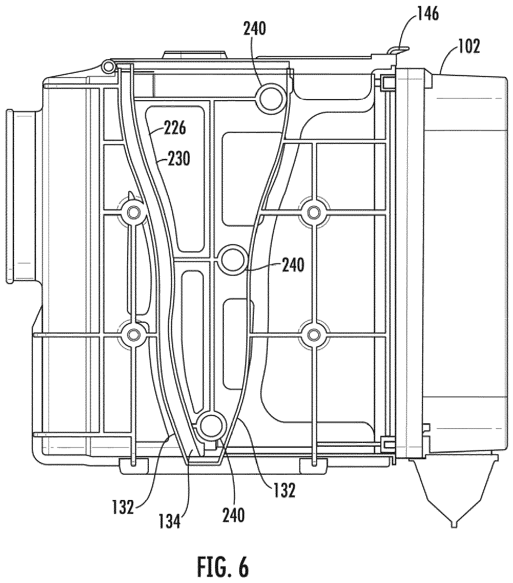

In some embodiments of the invention, the lateral projection component 240 includes one or more outwardly-projecting cylindrical posts. In FIGS. 5 and 6, the lateral projection components 240 include plurality of spaced-apart, outwardly-projecting cylindrical posts 240, with one of the cylindrical posts 240 being closer to the one side 138 of the second pair of opposing sides 120, another of the cylindrical posts 240 being closer to the other side 140 of the second pair of opposing sides 120, and a third cylindrical post 240 being positioned mid-way between the one side 138 and the other side 140.

FIG. 6 is a plan view of a filter assembly 250 incorporating the filter element 200 of FIG. 5, and constructed in accordance with an embodiment of the invention. As with filter element 100 described above, filter element 200 is installed into the housing 102 vertically, or at an angle normal to the central axis 116. Entry is typically through one side of the housing 102 in which an open end is configured to receive the filter element 100, and a lid or cover 146 hingedly attached to the housing 102 and moveable so as to close the open end of the housing 102 following installation of the filter element 200. As with the embodiment described above, in this embodiment, the seal pressure does not rely on the lid 146 forcing the filter element 200 into position. Accordingly, the stress on the lid 146, and the associated hinges and latches, is reduced as compared to some other filter assembly designs.

Thus, filter assembly 250 is also configured to maximize the use of volumetric space of the housing 102, while also removing the partial rotation or pivoting action used in some existing filter assemblies to seal the filter element 100 within the housing 102. This results in better use of space at a bottom of the housing 102.

The housing seal 134 of filter element 200 is supported by the support frame 206 along a surface of the non-linear guide projection component 230. The housing seal 134 is arranged to seat and seal against one of the complementary engagement surfaces 132 of the housing 102. Axial seal pressure is created by the three cylindrical posts 240 based on their contact with the complementary engagement surfaces 132 on the housing 102. It is understood that alternate embodiments of the filter element 200 may have more or less than three cylindrical posts 240, and further that the lateral projection components 240 may take a form other than that of a cylindrical post.

The use of the terms "a" and "an" and "the" and similar referents in the context of describing the invention (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law.

## Claims

1. A filter element (200) for an air filter, the filter element comprising:
a filter media pack(104) having an inlet end (110), an outlet end (112) and an outer periphery (114) extending between the inlet end (110) and the outlet end (112), the inlet end and the outlet end being separated along a central axis (116), the outer periphery (114) including a first pair of opposed sides (118) between the inlet end (110) and the outlet end (112), and a second pair of opposed sides (120) extending transversely between the first pair of opposed sides between the inlet end (110) and the outlet end (112); and
a frame (206) supporting the outer periphery (114) of the filter media pack, the frame (206) including opposing first frame side segments (222) along the first pair of opposed sides (118) of the media pack, and a second frame segment (224) along at least one of the second opposed sides (120) of the media pack, the first frame side segments (222) each including a pair of guide projections (226) along the respective first sides (118) of the media pack from one of the second sides (120) to the other of the second sides (120), the guide projections (226) being spaced apart from one another from a greater distance at the one second side, to a smaller distance at the other second side and arranged to receive axial forces when received within a housing (102) having complementary engagement surfaces (132); and
a housing seal (134) supported by the frame (206) along at least one guide projection (226) on each side of the media pack, each housing seal (134) being arranged to seal against one of the complementary engagement surfaces (132),
**characterized in that** one guide projection (226) includes a plurality of spaced-apart, lateral projection components (240), with one of the projection components (240) being closer to the one of the second sides (138), and another of the projection components (240) being closer to the other of the second sides (140).

2. The filter element (200) as in claim 1, wherein the at least one guide projection (226) defines a non-linear bearing surface (230).

3. The filter element (200) as in claim 2, wherein the non-linear bearing surface (230) extends in an undulating fashion from the one of the second sides to the other of the second sides.

4. The filter element (200) as in claim 1, wherein the projection components (240) each include a curved contact surface.

5. The filter element (200) as in claim 4, wherein the projection components (240) each comprise cylindrical posts.

6. The filter element (200) as in claim 1, and further including a handle (144) along the second frame segment (224).

7. The filter element (200) as in claim 1, wherein the guide projections (226) form a wedge shape.

8. A filter assembly (250) including a filter housing (102), and the filter element (200) as in any preceding claim, wherein the filter housing (102) includes an open end configured to receive the filter element (200), and a cover (146) hingedly attached to the housing (102) and moveable so as to close the open end of the housing.

## Patentansprüche

1. Ein Filterelement (200) für einen Luftfilter, wobei das Filterelement Folgendes beinhaltet:
ein Filtermedienpaket (104) mit einem Einlassende (110), einem Auslassende (112) und einer Außenbegrenzungsfläche (114), die sich zwischen dem Einlassende (110) und dem Auslassende (112) erstreckt, wobei das Einlassende und das Auslassende entlang einer Mittelachse (116) getrennt sind, wobei die Außenbegrenzungsfläche (114) ein erstes Paar entgegengesetzter Seiten (118) zwischen dem Einlassende (110) und dem Auslassende (112) und ein zweites Paar entgegengesetzter Seiten (120), die sich in Querrichtung zwischen dem ersten Paar entgegengesetzter Seiten erstrecken, zwischen dem Einlassende (110) und dem Auslassende (112) umfasst; und
einen Rahmen (206), der die Außenbegrenzungsfläche (114) des Filtermedienpakets trägt, wobei der Rahmen (206) gegenüberliegende erste Rahmenseitensegmente (222) entlang des ersten Paars entgegengesetzter Seiten (118) des Medienpakets und ein zweites Rahmensegment (224) entlang mindestens einer der zweiten entgegengesetzten Seiten (120) des Medienpakets umfasst, wobei die ersten Rahmenseitensegmente (222) je ein Paar Führungsvorsprünge (226) entlang der jeweiligen ersten Seiten (118) des Medienpakets von einer der zweiten Seiten (120) zu der anderen der zweiten Seiten (120) umfassen, wobei die Führungsvorsprünge (226) von einem größeren Abstand an der einen zweiten Seite zu einem kleineren Abstand an der anderen zweiten Seite voneinander beabstandet und so angeordnet sind, dass sie Axialkräfte aufnehmen, wenn sie in einem Gehäuse (102) mit komplementären Eingriffsoberflächen (132) aufgenommen werden; und
eine von dem Rahmen (206) getragene Gehäusedichtung (134) entlang mindestens eines Führungsvorsprungs (226) auf jeder Seite des Medienpakets, wobei jede Gehäusedichtung (134) so angeordnet ist, dass sie gegen eine der komplementären Eingriffsoberflächen (132) abdichtet,
**dadurch gekennzeichnet, dass** einer der Führungsvorsprünge (226) eine Vielzahl von voneinander beabstandeten, seitlichen Vorsprungskomponenten (240) umfasst, wobei eine der Vorsprungskomponenten (240) näher bei der einen der zweiten Seiten (138) ist und eine andere der Vorsprungskomponenten (240) näher bei der anderen der zweiten Seiten (140) ist.

2. Filterelement (200) gemäß Anspruch 1, wobei der mindestens eine Führungsvorsprung (226) eine nichtlineare Auflagefläche (230) definiert.

3. Filterelement (200) gemäß Anspruch 2, wobei sich die nichtlineare Auflagefläche (230) wellenförmig von der einen der zweiten Seiten zu der anderen der zweiten Seiten erstreckt.

4. Filterelement (200) gemäß Anspruch 1, wobei die Vorsprungskomponenten (240) je eine gekrümmte Kontaktoberfläche umfassen.

5. Filterelement (200) gemäß Anspruch 4, wobei die Vorsprungskomponenten (240) je Zylinderstifte beinhalten.

6. Filterelement (200) gemäß Anspruch 1, das ferner einen Griff (144) entlang des zweiten Rahmensegments (224) umfasst.

7. Filterelement (200) gemäß Anspruch 1, wobei die Führungsvorsprünge (226) eine Keilform bilden.

8. Eine Filteranordnung (250), umfassend ein Filtergehäuse (102) und das Filterelement (200) gemäß einem vorhergehenden Anspruch, wobei das Filtergehäuse (102) ein offenes Ende umfasst, das konfiguriert ist, um das Filterelement (200) aufzunehmen, und eine Abdeckung (146), die schwenkbar an dem Gehäuse (102) angebracht und bewegbar ist, um das offene Ende des Gehäuses zu verschließen.

## Revendications

1. Un élément formant filtre (200) pour un filtre à air, l'élément formant filtre comprenant :
un ensemble formant support de filtre (104) ayant une extrémité d'entrée (110), une extrémité de sortie (112) et une périphérie externe (114) s'étendant entre l'extrémité d'entrée (110) et l'extrémité de sortie (112), l'extrémité d'entrée et l'extrémité de sortie étant séparées le long d'un axe central (116), la périphérie externe (114) incluant une première paire de côtés opposés (118) entre l'extrémité d'entrée (110) et l'extrémité de sortie (112), et une deuxième paire de côtés opposés (120) s'étendant transversalement entre la première paire de côtés opposés entre l'extrémité d'entrée (110) et l'extrémité de sortie (112) ; et
une armature (206) soutenant la périphérie externe (114) de l'ensemble formant support de filtre, l'armature (206) incluant des premiers segments latéraux d'armature opposés (222) le long de la première paire de côtés opposés (118) de l'ensemble formant support, et un deuxième segment d'armature (224) le long d'au moins l'un des deuxièmes côtés opposés (120) de l'ensemble formant support, les premiers segments latéraux d'armature (222) incluant chacun une paire de saillies de guidage (226) le long des premiers côtés (118) respectifs de l'ensemble formant support allant de l'un des deuxièmes côtés (120) à l'autre des deuxièmes côtés (120), les saillies de guidage (226) étant mutuellement espacées d'une distance plus grande au niveau dudit un deuxième côté qu'une distance plus petite au niveau dudit autre deuxième côté et agencées de façon à recevoir des forces axiales lorsqu'elles sont reçues au sein d'un boîtier (102) ayant des surfaces d'engagement complémentaires (132) ; et
un joint d'étanchéité de boîtier (134) soutenu par l'armature (206) le long d'au moins une saillie de guidage (226) sur chaque côté de l'ensemble formant support, chaque joint d'étanchéité de boîtier (134) étant agencé de façon à assurer l'étanchéité contre l'une des surfaces d'engagement complémentaires (132),
**caractérisé en ce qu'**une saillie de guidage (226) inclut une pluralité de composants de saillie latéraux espacés (240), l'un des composants de saillie (240) étant plus proche dudit un côté parmi les deuxièmes côtés (138), et un autre des composants de saillie (240) étant plus proche dudit autre côté parmi les deuxièmes côtés (140).

2. L'élément formant filtre (200) tel que dans la revendication 1, dans lequel l'au moins une saillie de guidage (226) définit une surface d'appui non linéaire (230).

3. L'élément formant filtre (200) tel que dans la revendication 2, dans lequel la surface d'appui non linéaire (230) s'étend d'une manière ondulante dudit un côté parmi les deuxièmes côtés audit autre côté parmi les deuxièmes côtés.

4. L'élément formant filtre (200) tel que dans la revendication 1, dans lequel les composants de saillie (240) incluent chacun une surface de contact incurvée.

5. L'élément formant filtre (200) tel que dans la revendication 4, dans lequel les composants de saillie (240) comprennent chacun des montants cylindriques.

6. L'élément formant filtre (200) tel que dans la revendication 1, et incluant en outre une poignée (144) le long du deuxième segment d'armature (224).

7. L'élément formant filtre (200) tel que dans la revendication 1, dans lequel les saillies de guidage (226) forment une forme en coin.

8. Un ensemble filtre (250) incluant un boîtier de filtre (102), et l'élément formant filtre (200) tel que dans n'importe quelle revendication précédente, dans lequel le boîtier de filtre (102) inclut une extrémité ouverte configurée de façon à recevoir l'élément formant filtre (200), et un couvercle (146) fixé de manière articulée au boîtier (102) et mobile de sorte à fermer l'extrémité ouverte du boîtier.
